(19) Europäisches Patentamt
European Patent Office
Office européen des brevets

(11) **EP 3 147 180 B1**

(12) **FASCICULE DE BREVET EUROPEEN**

(45) Date de publication et mention de la délivrance du brevet:
**19.02.2020 Bulletin 2020/08**

(51) Int Cl.:
**B60W 30/12** *(2020.01)*     **B62D 15/02** *(2006.01)*
**G05D 1/00** *(2006.01)*

(21) Numéro de dépôt: **15290244.1**

(22) Date de dépôt: **25.09.2015**

(54) **SYSTÈME ET MÉTHODE D'AIDE À LA CONDUITE POUR VÉHICULE**

ASSISTENZSYSTEM UND -VERFAHREN ZUM LENKEN FÜR FAHRZEUG

DRIVING ASSISTANCE SYSTEM AND METHOD FOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**29.03.2017 Bulletin 2017/13**

(73) Titulaire: **Siemens Mobility S.A.S.**
**92320 Châtillon (FR)**

(72) Inventeurs:
• **Sierra, Adrien**
  **75015 Paris (FR)**
• **Marchand, Denis**
  **91470 Limours (FR)**

(74) Mandataire: **Deffner, Rolf**
**Siemens Mobility GmbH**
**Postfach 22 16 34**
**80506 München (DE)**

(56) Documents cités:
**US-A1- 2002 188 404     US-A1- 2013 060 414**
**US-A1- 2013 124 041     US-A1- 2014 032 017**

• **Han-Shue Tan: "Develop Precision Docking Function for Bus Operation", , 1 mars 2003 (2003-03-01), pages 1-31, XP055253424, Extrait de l'Internet: URL:http://citeseerx.ist.psu.edu/viewdoc/d ownload?doi=10.1.1.117.8148&rep=rep1&type= pdf [extrait le 2016-02-26]**
• **JORGE GODOY ET AL: "Power electric aiding controller for automated bus stopping", COMPATIBILITY AND POWER ELECTRONICS (CPE), 2011 7TH INTERNATIONAL CONFERENCE-WORKSHOP, IEEE, 1 juin 2011 (2011-06-01), pages 330-335, XP031957161, DOI: 10.1109/CPE.2011.5942256 ISBN: 978-1-4244-8806-3**
• **Han-Shue Tan ET AL: "Field Demonstration and Tests of Lane Assist/Guidance and Precision Docking Technology", , 1 janvier 2009 (2009-01-01), pages 1-90, XP055253479, Extrait de l'Internet: URL:http://www.path.berkeley.edu/sites/def ault/files/publications/PRR-2009-12.pdf [extrait le 2016-02-26]**
• **Fanping Bu ET AL: "Lane Assist Systems for Bus Rapid Transit, Volume III: Interface Requirements", , 1 novembre 2007 (2007-11-01), XP055253482, Extrait de l'Internet: URL:http://www.path.berkeley.edu/sites/def ault/files/publications/PRR-2007-23.pdf [extrait le 2016-02-26]**

**Description**

La présente invention concerne un système et une méthode d'aide à la conduite d'un véhicule configuré pour se déplacer le long d'une voie de circulation prédéfinie et équipée d'une infrastructure, en particulier une infrastructure sol, permettant d'aider un conducteur dudit véhicule à suivre une trajectoire prédéfinie et à accoster des quais répartis à diverses stations ou arrêts. La présente invention concerne en particulier des véhicules utilisés pour les transports en commun, tel que les bus ou les trolleys bus, ladite infrastructure équipant la voie de circulation comprenant par exemple une signalisation peinte sur le sol et définissant une trajectoire bien précise pour ledit véhicule, ce dernier comprenant par exemple un système de vision capable de lire et déterminer la trajectoire définie par ladite infrastructure, i.e. par exemple par ladite signalisation, afin d'assister le conducteur lors de sa conduite dudit véhicule. De tels systèmes d'assistance à la conduite par guidage optique au moyen dudit système de vision sont notamment connus de l'homme du métier.

Une problématique liée à de tels véhicules est notamment l'accostage aux quais et l'usage de voies de circulation totalement ou partiellement réservées, qu'ils s'agissent de voies en site propre ou en site banalisé. En effet, pour assurer la qualité de service, l'accostage aux quais doit se faire au plus près des quais des stations et doit être le plus précis possible, sans contact avec ledit quai ; d'autre part, la largeur des voies réservées est un des facteurs déterminant pour la vitesse d'exploitation dudit véhicule.

A ce sujet, des dispositifs permettant à un véhicule de corriger sa trajectoire par action sur un système de direction afin que ledit véhicule suive une trajectoire optimale sont connus de l'homme du métier, comme par exemple décrits dans les documents US 2013/060414A1, US 2002/0188404A1, ou encore le document intitulé « Develop Precision Docking Function for Bus Opération » (Han-Shue Tan, 01.03.2003).

Le document US2013/060414A1 décrit la transition d'un mode de conduite manuelle vers un mode de conduite automatique lorsqu'un écart dans la commande de direction est détecté.

Le document US2014/0032017A1 décrit la transition progressive d'une conduite automatique vers une conduite manuelle d'un véhicule en fonction d'une métrique de risque.

Le document US2013/0124041A1 décrit l'activation d'un système de conduite automatique pour éviter des obstacles.

Cependant, les techniques décrites ne sont pas optimales, notamment lors de manœuvre d'accostage à un quai ou lors d'un déplacement sur une voie réservée.

Afin de résoudre cette problématique, la présente invention propose un système et une méthode d'aide à la conduite d'un véhicule capable d'assister un conducteur lors d'une manœuvre d'accostage d'un quai ou lors d'un déplacement sur une voie réservée selon le contenu des revendications 1 et 11. Un ensemble de sous-revendications présente également d'autres avantages de l'invention.

La présente invention concerne un système d'aide à la conduite pour un véhicule, destiné à aider un conducteur à conduire ledit véhicule, par exemple lors d'un accostage d'un quai ou lors de la conduite dudit véhicule sur une voie réservée, ledit système comprenant :

- un dispositif de détermination d'une trajectoire capable de déterminer une trajectoire pour ledit véhicule, notamment à partir d'une infrastructure équipant ladite voie, par exemple une infrastructure sol, ledit dispositif de détermination d'une trajectoire comprenant par exemple une caméra destinée à être installée à l'avant dudit véhicule de façon à prendre des images de la voie équipée de ladite infrastructure et sur laquelle ledit véhicule est destiné à circuler, et étant en particulier capable de déterminer, notamment à partir d'une identification de ladite infrastructure dans les images de la voie, par exemple à partir d'un marquage au sol, une trajectoire pour ledit véhicule ;
- un dispositif de conduite autonome pour assister ledit conducteur lors de la conduite du véhicule, ledit dispositif de conduite autonome étant capable de conduire de manière automatique et autonome (i.e. libre d'une intervention dudit conducteur, par exemple libre d'une intervention du conducteur sur un volant de direction dudit véhicule) ledit véhicule en fonction de ladite trajectoire déterminable par le dispositif de détermination et de façon à le diriger selon ladite trajectoire;

ledit système d'aide à la conduite étant caractérisé en ce qu'il est configuré pour réaliser une prise de contrôle progressive d'un contrôle de la direction, notamment en fonction de la vitesse V(t) du véhicule et/ou d'un écart E(t) entre une position optimale que devrait avoir le véhicule au temps t s'il suivait ladite trajectoire et la position « réelle » dudit véhicule au temps t, afin de passer progressivement d'un mode de conduite manuelle dudit véhicule dans lequel un conducteur conduit ledit véhicule, à un mode de conduite automatique dudit véhicule dans lequel ledit dispositif de conduite autonome conduit ledit véhicule d'une manière libre d'une intervention dudit conducteur. En particulier, le dispositif de conduite autonome est également configuré pour donner (ou rendre) progressivement, notamment en fonction de la vitesse V(t) du véhicule et/ou dudit écart E(t) entre ladite trajectoire prédéfinie et la trajectoire réellement suivie par ledit véhicule au temps t, le contrôle de la direction dudit véhicule audit conducteur afin de passer progressivement du mode de conduite automatique au mode de conduite manuelle.

En effet, selon la présente invention, le dispositif de conduite autonome est notamment capable de déterminer une vitesse V(t) dudit véhicule, notamment en temps réel, et de prendre progressivement le contrôle de la direction dudit véhicule, ou inversement de rendre progressivement le contrôle dudit véhicule, en fonction de ladite vitesse V(t), i.e. le contrôle du guidage dudit véhicule afin d'assister progressivement la conduite du véhicule entre une vitesse V3 au-dessus de laquelle ledit véhicule est conduit par le conducteur d'une manière libre d'une assistance susceptible d'être fournie par le dispositif de conduite autonome (le véhicule étant dès lors en mode de conduite manuelle) et une vitesse V1 en dessous de laquelle ledit véhicule est conduit par ledit dispositif de conduite autonome d'une manière libre d'une intervention dudit conducteur (le véhicule étant alors en mode de conduite automatique, la conduite étant alors automatisée), avec V1 < V3. Ainsi, pour des vitesses V(t) supérieures à la vitesse V3, le véhicule est conduit et pris en charge à 100% par le conducteur, alors que pour une vitesse V(t) inférieure à V1, le véhicule est conduit et pris en charge à 100% par le dispositif de conduite autonome. A partir de V3 et pour des vitesses V décroissantes jusqu'à V1, le dispositif de conduite autonome est configuré pour prendre progressivement le contrôle de la direction dudit véhicule, de sorte que le contrôle de la direction du véhicule par le dispositif de conduite autonome passe progressivement de 0% à la vitesse V3 à 100% à la vitesse V1 et inversement lors du passage du mode de conduite automatique au mode de conduite manuelle. Selon la présente invention, il existe ainsi une vitesse V2 comprise entre V1 et V3, par exemple V2 ∈ ]V1, V3[, pour laquelle le dispositif de conduite autonome fourni une assistance partielle à la conduite (le véhicule étant alors en mode de conduite assistée), afin de permettre un passage progressif entre une conduite automatique pour des vitesses inférieures ou égales à V1 à une conduite manuelle (i.e. une assistance nulle) pour des vitesses supérieures ou égales à V3, et vice versa. Préférentiellement, V1 est différent de V3. En particulier, lesdites vitesses V1 et V3 sont prédéfinies dans une base de données dudit dispositif de conduite autonome.

Similairement, le dispositif de conduite autonome est en particulier capable de déterminer un écart E(t) entre une position réelle du véhicule (par exemple la position du milieu d'un essieu directeur par rapport à ses extrémités longitudinales) au temps t et la position optimale que devrait avoir ledit véhicule audit temps t s'il suivait ladite trajectoire définie par l'infrastructure équipant la voie, et de prendre progressivement le contrôle de la direction dudit véhicule, ou inversement de rendre progressivement le contrôle dudit véhicule, en fonction dudit écart E(t), i.e. le contrôle du guidage dudit véhicule afin d'assister progressivement la conduite du véhicule entre un écart E1 en-dessous duquel ledit véhicule est conduit par le conducteur d'une manière libre d'une assistance susceptible d'être fournie par le dispositif de conduite autonome (le véhicule étant dès lors en mode de conduite manuelle) et un écart E3 au-dessus duquel ledit véhicule est conduit par ledit dispositif de conduite autonome d'une manière libre d'une intervention dudit conducteur (le véhicule étant alors en mode de conduite automatique, la conduite étant alors automatisée), notamment de façon à aider le conducteur à réduire la valeur dudit écart E(t) afin que ce dernier devienne inférieur ou égal à E1, avec E1 < E3. Ainsi, pour un écart E(t) supérieurs à E3, le véhicule est conduit et pris en charge à 100% par le dispositif de conduite autonome, alors que pour un écart E(t) inférieur à E1, le véhicule est conduit et pris en charge à 100% par le conducteur. A partir de E3 et pour des écarts E(t) décroissants jusqu'à E1, le dispositif de conduite autonome est configuré pour rendre progressivement le contrôle de la direction dudit véhicule, de sorte que le contrôle de la direction du véhicule par le dispositif de conduite autonome passe progressivement de 100% pour un écart supérieur ou égal E3 à 0% pour un écart inférieur ou égal à E1 et inversement lors du passage du mode de conduite manuelle au mode de conduite automatique. Selon la présente invention, il existe ainsi un écart E2 compris entre E1 et E3, par exemple E2 ∈ ]E1, E3[, pour lequel le dispositif de conduite autonome fourni une assistance partielle à la conduite (le véhicule étant alors en mode de conduite assistée), afin de permettre un passage progressif entre une conduite automatique pour des écarts E(t) supérieurs ou égaux à E3 à une conduite manuelle (i.e. une assistance nulle) pour des écarts E(t) inférieurs ou égaux à E1, et vice versa. Préférentiellement, E1 est différent de E3. En particulier, lesdits écarts E1 et E3 sont prédéfinis dans ladite base de données dudit dispositif de conduite autonome.

Ainsi, le dispositif de conduite autonome est capable de déterminer une vitesse V(t) dudit véhicule et/ou un écart E(t) pour ledit véhicule, et de prendre progressivement le contrôle de la direction dudit véhicule, ou inversement de rendre progressivement le contrôle dudit véhicule, en fonction de ladite vitesse V(t) et/ou dudit écart E(t).

En particulier, le dispositif de conduite autonome selon l'invention comprend un système de contrôle de la direction dudit véhicule configuré pour contrôler une orientation d'un essieu directeur dudit véhicule par application d'un couple de forces sur un arbre de direction dudit essieu directeur, de façon à diriger ledit véhicule selon une trajectoire déterminée, par exemple par ledit dispositif de détermination de la trajectoire. Ledit système de contrôle de la direction est en particulier couplé mécaniquement à un arbre ou colonne de direction dirigeant ledit essieu directeur afin d'y appliquer ledit couple de forces et est configuré de façon à pouvoir diriger ledit essieu directeur si et seulement au moins 100% de l'intensité dudit couple de force est appliqué à l'arbre de direction, l'application par ledit système de contrôle d'une intensité inférieure à 100% étant insuffisante pour orienter ledit essieu directeur. En particulier, le système de contrôle de la direction dudit véhicule fonctionne en série avec un système de direction assistée connu de l'homme du métier, ledit système de contrôle de la direction dudit véhicule étant notamment capable de contrôler ledit système de direction assistée. Le contrôle du système de contrôle de la direction par ledit dispositif de conduite autonome permet au dispositif de conduite autonome de gérer le passage progressif entre le mode de conduite automatique et le mode de conduite manuelle. En effet, le dispositif de conduite autonome est en particulier configuré pour déterminer et contrôler l'intensité du couple de forces applicable sur un arbre de direction du véhicule par ledit système de contrôle de la direction en fonction de la vitesse V(t) dudit véhicule et de la détermination d'une trajectoire par ledit dispositif de détermination d'une trajectoire, et/ou dudit écart E(t), afin de diriger ledit véhicule selon ladite trajectoire, l'application dudit couple de force sur l'arbre de direction du véhicule permettant de réduire, soit totalement pour des vitesses inférieures à V1 et/ou des écarts supérieurs à E3, soit partiellement pour des vitesses comprises entre V1 et V3 et/ou des écarts compris entre E1 et E3, l'effort à fournir par le conducteur pour diriger ledit véhicule, par exemple pour tourner le volant de direction dudit véhicule, l'arbre de direction dudit véhicule contrôlant quant à lui l'orientation dudit essieu directeur du véhicule.

En effet, selon la présente invention, le dispositif de conduite autonome est en particulier capable de comparer la vitesse V(t) dudit véhicule mesurée ou déterminée au temps t aux vitesses V1 et V3, et de calculer un taux $T_V$ d'application dudit couple de forces en fonction de la vitesse V(t) dudit véhicule et en fonction d'une détermination de ladite trajectoire :

- ledit taux $T_V$ étant de 0% pour des vitesses supérieures ou égales à V3 et/ou si aucune trajectoire n'a pu être identifiée et/ou déterminée par le dispositif de détermination d'une trajectoire, i.e. le dispositif de conduite autonome contrôle ledit système de contrôle de la direction de façon à ce que 0% de l'intensité du couple de force applicable à l'arbre de direction pour contrôler la direction dudit véhicule soit appliqué pour des vitesses supérieures ou égales à V3. Dans ce cas, l'effort à fournir par le conducteur pour diriger le véhicule n'est pas réduit et ledit véhicule est alors conduit par le conducteur. Il s'agit du mode de conduite manuelle ;
- ledit taux $T_V$ étant de 100% pour des vitesses inférieures ou égales à V1 et à la condition qu'une trajectoire ait été déterminée par ledit dispositif de détermination d'une trajectoire, i.e. le dispositif de conduite autonome contrôle ledit système de contrôle de la direction de façon à ce que 100% de l'intensité du couple de force applicable à l'arbre de direction soit appliqué pour des vitesses inférieures ou égales à V1. Dans ce cas, l'effort à fournir par le conducteur, par exemple sur le volant de direction, pour diriger le véhicule est totalement réduit, i.e. inexistant, et ledit véhicule est alors conduit par le dispositif de conduite autonome, ledit conducteur n'ayant plus aucun effort à fournir pour la conduite dudit véhicule. Il s'agit du mode de conduite automatique ;
- ledit taux $T_V$ variant en fonction de la vitesse V(t) en prenant des valeurs comprises entre 0 % et 100%, par exemple en prenant des valeurs continuellement croissantes de 0% à 100% pour des vitesses décroissantes de V3-$\Delta$V à V1+$\Delta$V, $\Delta$V étant une vitesse positive inférieure à (V3-VI)/2, le taux $T_V$ étant alors variable et permettant de varier l'intensité du couple de forces entre lesdites vitesses V1 et V3 lorsqu'une trajectoire a été déterminée par ledit dispositif de détermination d'une trajectoire et que la vitesse V(t) du véhicule est comprise entre V1 et V3. En d'autres termes, pour une vitesse V2 comprise dans l'intervalle ]V1+$\Delta$V, V3-$\Delta$V[, le taux $T_V$ sera un pourcentage compris dans l'intervalle [0, 100], préférentiellement compris dans l'intervalle ]0, 100[, i.e. le dispositif de conduite autonome contrôle ledit système de contrôle de la direction de façon à ce que le pourcentage de l'intensité du couple de force applicable à l'arbre de direction soit appliqué audit arbre de direction. Dans ce cas, l'effort à fournir par le conducteur pour diriger le véhicule est partiellement réduit d'un pourcentage équivalent au taux $T_V$, et ledit véhicule est alors conduit par le conducteur assisté par le dispositif de conduite autonome. L'effort à fournir par le conducteur pour la conduite dudit véhicule est alors déterminé en fonction du taux $T_V$. Il s'agit du mode de conduite assistée en fonction de la vitesse. Dans un mode particulier de réalisation de la présente invention, $\Delta$V = 0.

Préférentiellement, le dispositif de conduite autonome est également capable de déterminer en fonction du temps t, notamment en temps réel, et si une trajectoire a été déterminée à partir de ladite infrastructure, ledit écart E(t) entre une position réelle du véhicule et une position optimale définie par la trajectoire déterminée par le dispositif de détermination d'une trajectoire, de comparer l'écart E(t) défini pour ledit véhicule au temps t aux écarts E1 et E3, et de calculer un taux $T_E$ d'application dudit couple de forces en fonction de l'écart E(t):

- ledit taux $T_E$ étant de 0% pour des écarts inférieurs ou égaux à E1 et/ou si aucune trajectoire n'a pu être identifiée et/ou déterminée par le dispositif de détermination d'une trajectoire, i.e. le dispositif de conduite autonome contrôle ledit système de contrôle de la direction de façon à ce que 0% de l'intensité du couple de force applicable à l'arbre de direction pour contrôler la direction dudit véhicule soit appliqué pour des écarts inférieurs ou égaux à E1. Dans ce cas, l'effort à fournir par le conducteur pour diriger le véhicule n'est pas réduit et ledit véhicule est alors conduit par le conducteur. Il s'agit du mode de conduite manuelle ;
- ledit taux $T_E$ étant de 100% pour des écarts supérieurs ou égaux à E3 et à la condition qu'une trajectoire ait été déterminée par ledit dispositif de détermination d'une trajectoire, i.e. le dispositif de conduite autonome contrôle ledit système de contrôle de la direction de façon à ce que 100% de l'intensité du couple de force applicable à l'arbre de direction soit appliqué pour des écarts supérieurs ou égaux à E3. Dans ce cas, l'effort à fournir par le conducteur, par exemple sur le volant de direction, pour diriger le véhicule est totalement réduit, i.e. inexistant, et ledit véhicule est alors conduit par le dispositif de conduite autonome, ledit conducteur n'ayant plus aucun effort à fournir pour la conduite dudit véhicule. Il s'agit du mode de conduite automatique ;

- ledit taux $T_E$ variant en fonction de l'écart E(t) en prenant des valeurs comprises entre 0% et 100%, par exemple des valeurs continuellement croissantes de 0% à 100% pour des écarts E(t) croissants de E1+ΔE à E3-ΔE, ΔE étant un écart positif inférieur à (E3-E1)/2, le taux $T_E$ étant alors variable et permettant de varier l'intensité du couple de forces appliqué sur l'arbre de direction lorsque l'écart E(t) prend des valeurs comprises entre E1 et E3 et qu'une trajectoire a été déterminée par ledit dispositif de détermination d'une trajectoire audit temps t. En d'autres termes, pour un écart E2 compris dans l'intervalle ]E1+ΔE, E3-ΔE[, le taux $T_E$ sera un pourcentage compris dans l'intervalle [0, 100], préférentiellement compris dans l'intervalle ]0, 100[, i.e. le dispositif de conduite autonome contrôle ledit système de contrôle de la direction de façon à ce que le pourcentage de l'intensité du couple de force applicable à l'arbre de direction soit appliqué audit arbre de direction. Dans ce cas, l'effort à fournir par le conducteur pour diriger le véhicule est partiellement réduit d'un pourcentage équivalent au taux $T_E$, et ledit véhicule est alors conduit par le conducteur assisté par le dispositif de conduite autonome. L'effort à fournir par le conducteur pour la conduite dudit véhicule est alors déterminé en fonction du taux $T_E$. Il s'agit du mode de conduite assistée en fonction de l'écart par rapport à ladite trajectoire prédéfinie par l'infrastructure de la voie. Dans un mode particulier de réalisation de la présente invention, ΔE = 0.

Préférentiellement et avantageusement, le dispositif de conduite autonome est également configuré pour déterminer un taux global $T_G$ en fonction des taux $T_V$ et $T_E$, par exemple $T_G = (T_E + T_V)/2$, ou $T_G = (T_E \cdot T_V)$, ou $T_G = $ max. $(T_E, T_V)$ (i.e. $T_G = T_E$ si $T_E > T_V$, sinon $T_G = T_V$), chacun des taux s'exprimant en pourcent, en fonction de la détermination au temps t de l'écart E(t) et de la vitesse V(t) par le dispositif de conduite autonome. Ledit taux global est en particulier déterminé automatiquement à chaque fois qu'un taux $T_V$ et qu'un taux $T_E$ sont déterminés à un même temps t. Lorsqu'un taux global est déterminé, alors un pourcentage de l'intensité dudit couple de forces équivalent à la valeur du taux global est appliqué à l'arbre de direction. Lorsqu'uniquement le taux $T_V$, respectivement $T_E$, est déterminé, alors un pourcentage de l'intensité dudit couple de forces équivalent à la valeur du taux $T_V$, respectivement $T_E$, est appliqué à l'arbre de direction.

La présente invention concerne également une méthode d'aide à la conduite d'un véhicule au moyen du système d'aide à la conduite précédemment décrit, ladite méthode étant destinée à assister un conducteur pour la conduite dudit véhicule, la méthode comprenant :

- une détermination d'une vitesse dudit véhicule par un dispositif de conduite autonome;
- une détermination d'une trajectoire dudit véhicule par un dispositif de détermination d'une trajectoire ;
- une conduite automatique et autonome dudit véhicule au moyen dudit dispositif de conduite autonome si à un temps t, une trajectoire a été déterminée par ledit dispositif de détermination d'une trajectoire et la vitesse dudit véhicule préalablement déterminée est inférieure ou égale à une vitesse V1 prédéfinie et/ou un écart E(t) entre une position optimale dudit véhicule définie par la trajectoire, i.e. s'il suivait ladite trajectoire au temps t, et la position réelle dudit véhicule au temps t, E(t) étant déterminable par le dispositif de conduite autonome, est supérieur ou égal à un écart prédéfini E1, ladite conduite automatique comprenant une commande ou contrôle d'un système de contrôle de la direction par le dispositif de conduite autonome en fonction de ladite trajectoire afin de diriger ou guider ledit véhicule selon ladite trajectoire d'une manière libre d'une intervention dudit conducteur;
- une conduite assistée par ledit dispositif de conduite autonome si audit temps t, une trajectoire a été déterminée par ledit dispositif de détermination d'une trajectoire et la vitesse V(t) dudit véhicule préalablement déterminée est comprise entre V1 et V3 et/ou l'écart E(t) préalablement déterminé est compris entre E1 et E3, ladite conduite assistée comprenant une détermination d'au moins un taux d'application d'un couple de forces sur un arbre de direction dudit véhicule en fonction de la vitesse V(t) et/ou de l'écart E(t) afin de contrôler l'intensité dudit couple de forces appliquée audit arbre de direction, et une commande ou contrôle du système de contrôle de la direction par le dispositif de conduite autonome en fonction de ladite trajectoire et dudit taux afin d'aider le conducteur à diriger ou guider ledit véhicule selon ladite trajectoire en réduisant l'effort à fournir par ledit conducteur lors de sa conduite dudit véhicule ;
- une conduite manuelle, i.e. libre d'une assistance ou d'un contrôle du système de contrôle de la direction par ledit dispositif de conduite autonome dès que la vitesse V dudit véhicule est supérieure à la vitesse V3 prédéfinie et/ou qu'aucune trajectoire n'a pu être déterminée par ledit dispositif de détermination d'une trajectoire et/ou que l'écart E(t) est inférieur à l'écart E1 prédéfini.

Afin de mieux comprendre la présente invention, des exemples de réalisation et d'application sont fournis à l'aide de:

Figure 1 exemple de réalisation d'un système d'aide à la conduite équipant un véhicule en manœuvre d'accostage d'un quai selon l'invention.

Figure 2    exemple de réalisation d'un système d'aide à la conduite équipant un véhicule circulant sur une voie de circulation réservée selon l'invention.

Figure 3    illustration de la variation progressive de l'application du taux $T_V$ d'assistance à la conduite fournit par le dispositif de conduite autonome selon l'invention.

Figure 4    illustration de la variation progressive de l'application du taux $T_E$ d'assistance à la conduite fournit par le dispositif de conduite autonome selon l'invention.

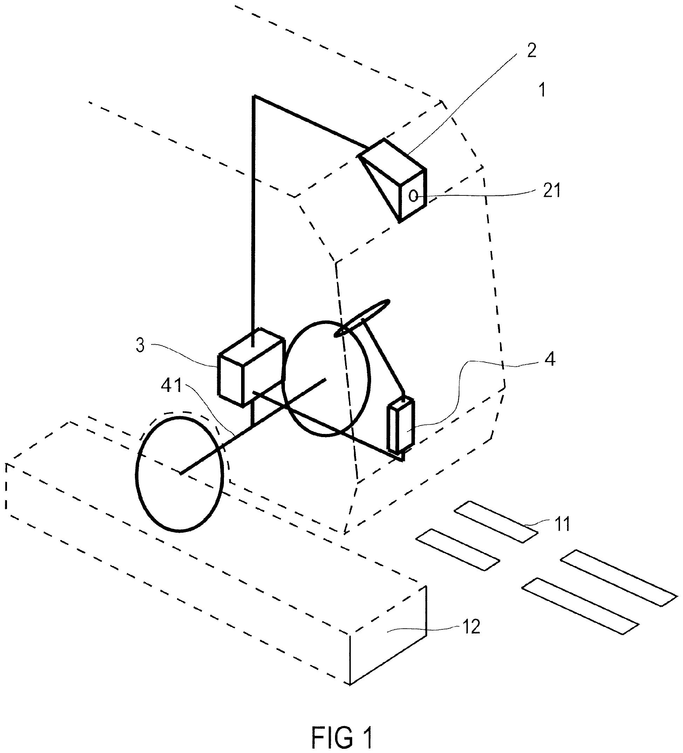

La figure 1 présente schématiquement un véhicule 1, équipé d'un système d'aide à la conduite selon l'invention, accosté auprès d'un quai 12. Ledit système d'aide à la conduite comprenant :

- un dispositif de détermination d'une trajectoire 2 pour le véhicule 1, comprenant par exemple un système optique tel une caméra 21 configurée pour prendre des images d'une voie pourvue d'une infrastructure sol destinée à guider ledit véhicule 1 selon une trajectoire prédéfinie, ladite infrastructure sol consistant par exemple en un marquage apposé sur le sol, ou des bornes, ou tout autre élément permettant une identification d'une trajectoire par le dispositif de détermination d'une trajectoire, comme par exemple des lignes 11 peintes sur ledit sol. Ledit dispositif de détermination d'une trajectoire est capable de déterminer, à partir de ladite infrastructure sol, une trajectoire pour ledit véhicule ;
- un dispositif de conduite autonome 3 capable de conduire et guider de manière autonome ledit véhicule 1 en fonction de ladite trajectoire, ledit dispositif de conduite autonome 3 étant connecté au dispositif de détermination d'une trajectoire 2 afin d'échanger des informations relatives à ladite trajectoire déterminée par ledit dispositif de détermination d'une trajectoire. Ledit dispositif de conduite autonome 3 est de plus connectable à un système de contrôle de la direction 4 afin de contrôler l'intensité d'un couple de forces applicable par ledit système de contrôle de la direction à un arbre de direction dudit véhicule, le contrôle de ladite intensité dudit couple de forces permettant de réduire ou augmenter l'effort que doit fournir le conducteur du véhicule pour diriger, i.e. conduire, ledit véhicule par contrôle de sa direction, par exemple par contrôle d'un essieu directeur 41. En particulier, le dispositif de conduite autonome est également capable de déterminer une vitesse V(t) pour le véhicule ainsi qu'un écart E(t) entre une position réelle du véhicule, par exemple la position du milieu de son essieu directeur, et une position optimale définie par la trajectoire;

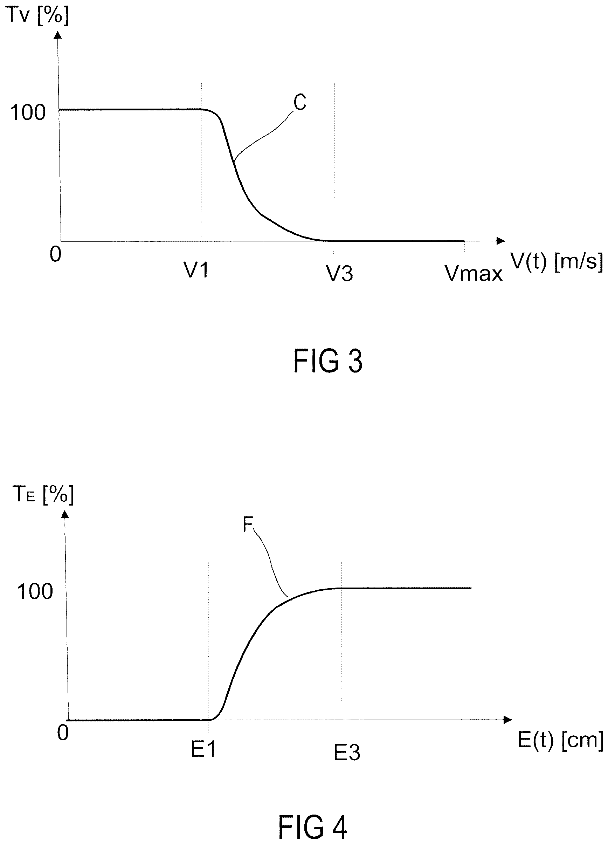

la présente invention étant caractérisée en ce que le dispositif de conduite autonome 3 est configuré pour prendre progressivement le contrôle du contrôle de la direction du véhicule 1, notamment à partir d'une vitesse V(t) égale à V3 (voir figure 3) au-dessus de laquelle ledit véhicule est conduit manuellement par le conducteur jusqu'à une vitesse V(t) égale à V1 en-dessous de laquelle ledit véhicule est conduit par ledit dispositif de conduite autonome 3 d'une manière libre d'une intervention du conducteur, et inversement pour donner progressivement le contrôle de la direction dudit véhicule 1 audit conducteur à partir de la vitesse V(t) égale à V1 jusqu'à la vitesse V(t) égale à V3, et/ou à partir d'un écart E(t) égal à E1 (voir figure 4) en-dessous duquel ledit véhicule est conduit manuellement par le conducteur jusqu'à un écart E(t) égale à E3 au-dessus duquel ledit véhicule est conduit par ledit dispositif de conduite autonome 3 d'une manière libre d'une intervention du conducteur, et inversement pour donner progressivement le contrôle de la direction dudit véhicule 1 audit conducteur à partir d'un écart E(t) valant E3 jusqu'à un écart E(t) valant E1.
En d'autres termes, le dispositif de conduite autonome 3 selon l'invention permet de basculer progressivement, par exemple en fonction de la vitesse V(t) et/ou dudit écart E(t), d'un mode de conduite tout automatique à un mode de conduite manuelle et inversement, en passant par un mode de conduite assistée dans lequel le dispositif de conduite autonome fournit audit conducteur une assistance à la direction dudit véhicule en contrôlant l'intensité d'un couple de forces appliqué à un arbre de direction dudit véhicule par le système de contrôle de la direction 4 pour guider ledit véhicule.

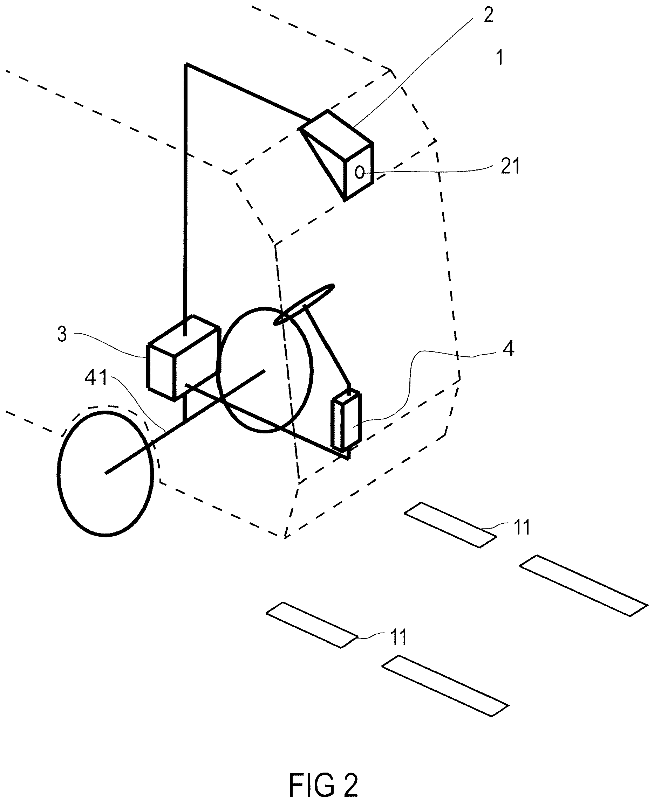

La figure 2 montre le même véhicule que présenté en figure 1, équipé du système d'aide à la conduite selon l'invention, et circulant sur une voie de circulation réservée délimitée par une infrastructure sol consistant notamment en des lignes 11 peintes sur le sol. Avantageusement, le dispositif de conduite autonome 3 du système d'aide à la conduite selon l'invention est en particulier configuré pour réaliser une prise de contrôle progressive d'un contrôle de la direction, et respectivement pour rendre progressivement le contrôle de la direction, afin de passer progressivement d'un mode de conduite manuelle dudit véhicule lorsque la vitesse V(t) du véhicule au temps t est inférieure à V1 et qu'aucune trajectoire n'a été déterminée par le dispositif de détermination d'une trajectoire 2, à un mode de conduite automatique dudit véhicule si au temps t+Δt, Δt > 0, la vitesse V(t+Δt) est toujours inférieure à V1 et le dispositif de détermination d'une trajectoire 2 a déterminé une trajectoire pour ledit véhicule.
Egalement, le dispositif de conduite autonome 3 du système d'aide à la conduite selon l'invention est en particulier configuré pour rendre progressivement le contrôle de la direction, afin de passer progressivement d'un mode de conduite automatique dudit véhicule lorsque la vitesse V(t) du véhicule au temps t est inférieure à V1 et qu'une trajectoire a été déterminée par le dispositif de détermination d'une trajectoire 2, à un mode de conduite manuelle dudit véhicule si au temps t+∆t, ∆t > 0, la vitesse V(t+∆t) est toujours inférieure à V1, mais que le dispositif de détermination d'une trajectoire 2 est incapable de déterminer une trajectoire pour ledit véhicule audit temps t+∆t.

En particulier, cette prise de contrôle progressive du contrôle de la direction, ou respectivement la capacité à rendre progressivement le contrôle de la direction, peuvent également être réalisés par ledit dispositif de conduite autonome 3 pour le passage du mode de conduite manuelle au mode de conduite assistée, respectivement inversement, lorsque la vitesse V(t) est comprise entre V1 et V3, et qu'aucune trajectoire n'a été déterminée par le dispositif de détermination d'une trajectoire au temps t et qu'au temps t+∆t, la vitesse V(t+∆t) est toujours comprise entre V1 et V3, et le dispositif de détermination d'une trajectoire 2 a déterminé une trajectoire pour ledit véhicule, respectivement, lorsque la vitesse V(t) est comprise entre V1 et V3, et qu'une trajectoire a été déterminée par le dispositif de détermination d'une trajectoire au temps t et qu'au temps t+∆t, la vitesse V(t+∆t) est toujours comprise entre V1 et V3, mais que le dispositif de détermination d'une trajectoire 2 est incapable de déterminer une trajectoire pour ledit véhicule audit temps t+∆t.

Le graphique illustré en figure 3 comprend une courbe C allant de V(t) = 0 à V(t) = $V_{max}$ (i.e. la vitesse maximale pouvant être atteinte par le véhicule 1) et représentant le taux $T_V$ d'application dudit couple de forces exprimé en pourcent en fonction de la vitesse V(t) dudit véhicule 1 exprimée en m/s. Lorsque le taux $T_V$ vaut 100%, i.e. pour des vitesses inférieures à V1, alors 100% de l'intensité du couple de forces est appliqué à l'arbre de direction, permettant alors une conduite automatique par le dispositif de conduite autonome libre d'une intervention du conducteur. Lorsque le taux $T_V$ vaut 0%, i.e. pour des vitesses supérieures à V3, alors 0% de l'intensité du couple de forces est appliqué à l'arbre de direction si bien que la conduite dudit véhicule 1 est uniquement assurée par le conducteur, ledit dispositif de conduite autonome 3 n'intervenant pas pour guider le véhicule ou assister le conducteur pour la conduite dudit véhicule. Le dispositif de conduite autonome est configuré pour contrôler le système de contrôle de la direction 4 afin qu'un taux $T_V$ équivalent à 100% soit appliqué pour les vitesses V(t) inférieures ou égales à V1 si une trajectoire a été déterminée par le dispositif de détermination d'une trajectoire 2, et qu'un taux $T_V$ équivalent à 0% soit appliqué pour les vitesses V(t) supérieures ou égales à V3 qu'une trajectoire ait ou non été déterminée.

Pour toute vitesse V(t) comprise entre V1 et V3, le dispositif de conduite autonome 3 est configuré pour calculé un taux spécifique $T_V$ à appliquer en fonction de ladite vitesse V(t) de façon à permettre une assistance progressive continue de la conduite du véhicule 1 en mettant en œuvre un contrôle progressif de la direction dudit véhicule au moyen du système de contrôle de la direction 4. En particulier le taux $T_V$ est calculé selon l'équation suivante :

$$T_V = \begin{cases} 100\ \%,\ si\ V(t) \leq V1 + \Delta V \\ 100 - \left(100 \cdot \frac{V(t) - V1 - \Delta V}{V3 - V1 - 2\Delta V}\right),\ si\ V1 + \Delta V < V(t) < V3 - \Delta V \quad \text{(Eq. 1)} \\ 0\%,\ si\ V(t) \geq V3 - \Delta V \end{cases}$$

Où ∆V est une vitesse supérieure ou égale à 0, V1 est la vitesse seuil inférieure prédéfinie, V3 est la vitesse seuil supérieure prédéfinie, et V(t) est la vitesse du véhicule au temps t. Préférentiellement et pour un parcours urbain, V1 est typiquement compris entre 9.7 m/s et 12.5 m/s, et V3 est typiquement compris entre 11.1 m/s et 13.9 m/s, avec V1 < V3.Préférentiellement et pour un parcours interurbain, V1 est typiquement compris entre 17m/s et 19m/s, et V3 est typiquement compris entre 22m/s et 25m/s. Dans des modes de réalisations particuliers de la présente invention, la vitesse V1 peut être égale à 0 et la vitesse V3 peut être égale à $V_{max}$. Dans un autre cas particulier de la présente invention, V1 peut être égale à V3. Avantageusement, ∆V permet de stabiliser le système autour des valeurs seuils des vitesses V1 et V3 en définissant une bande morte autour desdites valeurs seuils.

La figure 4 présente une courbe F du taux $T_E$ exprimé en pourcent en fonction de l'écart E(t) exprimé en cm. Lorsque le taux $T_E$ vaut 100%, i.e. pour des écarts E(t) supérieurs à E3, alors 100% de l'intensité du couple de forces est appliqué à l'arbre de direction, permettant alors une conduite automatique par le dispositif de conduite autonome libre d'une intervention du conducteur. Lorsque le taux $T_E$ vaut 0%, i.e. pour des écarts inférieurs à E1, alors 0% de l'intensité du couple de forces est appliqué à l'arbre de direction si bien que la conduite dudit véhicule 1 est uniquement assurée par le conducteur, ledit dispositif de conduite autonome 3 n'intervenant pas pour guider le véhicule ou assister le conducteur pour la conduite dudit véhicule. Le dispositif de conduite autonome est configuré pour contrôler le système de contrôle de la direction 4 afin qu'un taux $T_E$ équivalent à 100% soit appliqué pour les écarts E(t) supérieurs ou égaux à E3 si une trajectoire a été déterminée par le dispositif de détermination d'une trajectoire 2, et qu'un taux $T_E$ équivalent à 0% soit appliqué pour les écarts E(t) inférieurs ou égaux à E1 ou si la trajectoire n'a pas été déterminée.

Pour tout écart E(t) compris entre E1 et E3, le dispositif de conduite autonome 3 est configuré pour calculé un taux spécifique $T_E$ à appliquer en fonction dudit écart E(t) de façon à permettre une assistance progressive continue de la conduite du véhicule 1 en mettant en œuvre un contrôle progressif de la direction dudit véhicule au moyen du système de contrôle de la direction 4. En particulier le taux $T_E$ est calculé selon l'équation suivante :

$$T_E = \begin{cases} 0\ \%,\ si\ E(t) \le E1 + \Delta E \\ 100 \cdot \left( \frac{E(t) - E1 - \Delta E}{E3 - E1 - 2\Delta E} \right),\ si\ E1 + \Delta E < E(t) < E3 - \Delta E \quad \text{(Eq. 2)} \\ 100\%,\ si\ E(t) \ge E3 - \Delta E \end{cases}$$

Où ΔE est un écart supérieur ou égal à 0, E1 est un écart seuil inférieur prédéfini, E3 est un écart seuil supérieur prédéfini, et E(t) est l'écart entre la position du véhicule au temps t (par exemple la position du milieu dudit essieu directeur) et une position optimale que devrait avoir ledit véhicule (par exemple une position optimale que devrait avoir ledit milieu dudit essieu directeur) au temps t s'il suivait ladite trajectoire. Préférentiellement E1 est typiquement compris entre 8 cm et 12 cm et vaut préférentiellement 10 cm et E3 est typiquement compris entre 18 cm et 22 cm et vaut typiquement 20 cm. Avantageusement, ΔE permet de stabiliser le système autour des valeurs seuils des écarts E1 et E3 en définissant une bande morte autour desdites valeurs seuils.

Pour résumé, la présente invention propose une prise en charge progressive de la conduite d'un véhicule par un dispositif de conduite autonome via une commande de l'intensité d'un couple de forces destiné à être appliqué sur un arbre de direction dudit véhicule afin de le diriger, de façon à ce que, au-dessus d'une vitesse seuil V3 et/ou en-dessous d'un écart seuil E1, la conduite du véhicule se fasse en mode manuelle, en-dessous d'une vitesse seuil V1 et/ou au-dessus d'un écart seuil E3, la conduite du véhicule se fasse en mode complètement automatique, et entre les vitesses seuils V1 et V3 et/ou entre les écarts seuils E1 et E3, l'assistance fournie par ledit dispositif de conduite autonome soit progressive afin de passer progressivement du mode de conduite manuelle au mode de conduite automatique et vice versa.

L'assistance fournie par ledit dispositif de conduite autonome est donc variable et dépend de la vitesse V(t) dudit véhicule et/ou d'une mesure dudit écart E(t) au temps t.

Le dispositif de conduite autonome du système d'aide à la conduite selon l'invention se comporte ainsi comme un copilote, ledit dispositif de conduite autonome étant configuré pour appliquer ledit couple de forces sur l'arbre de direction, ou autrement dit sur la colonne de direction, en parallèle d'un couple de forces applicables par le conducteur au même moment (actions simultanées), le pourcentage d'intensité dudit couple de forces généré par le système de contrôle de la direction variant de de 0 à 100% en fonction de la vitesse V(t) du véhicule et/ou dudit écart E(t) au temps t, l'application de 100% de l'intensité du couple de force permettant un contrôle total de la direction par le système de contrôle de la direction, i.e. le système de contrôle de la direction est capable de diriger de manière indépendante et autonome (i.e. libre d'une intervention du conducteur) l'essieu directeur lorsque le pourcentage d'intensité équivaut 100%, alors que le couple de forces appliqué sur l'arbre de direction ne suffit pas pour orienter l'essieu directeur lorsque le pourcentage de l'intensité du couple de forces appliqué est inférieur à 100%, nécessitant dès lors un effort (ou couple de forces) additionnel fourni par le conducteur. Pour toutes vitesses entre 0 et $V_{max}$, le dispositif de conduite autonome est configuré pour déterminer un couple de forces optimal à appliquer sur l'arbre de direction ou la colonne de direction pour assurer la conduite autonome dudit véhicule sans écart par rapport à la trajectoire déterminée par le dispositif de détermination d'une trajectoire, ledit couple de forces étant alors pondéré par le taux $T_V$ tel que défini précédemment. Le système de contrôle de la direction se distingue ainsi du système de direction assistée dudit véhicule, puisque le premier permet d'appliquer un couple de forces sur l'arbre de direction en parallèle de l'effort qui est fourni par le conducteur, alors que le second agit en série (en amplificateur) du couple de forces appliqué par le conducteur sur la colonne de direction.

## Revendications

1. Système d'aide à la conduite pour un véhicule (1), ledit système comprenant :

   - un dispositif de détermination d'une trajectoire (2) capable de déterminer une trajectoire pour ledit véhicule;
   - un dispositif de conduite autonome (3) pour assister ledit conducteur lors de la conduite du véhicule;

   ledit système d'aide à la conduite étant **caractérisé en ce que** le dispositif de conduite autonome (3) est configuré pour réaliser une prise de contrôle progressive d'un contrôle de la direction afin de passer progressivement en fonction d'une vitesse V(t) du véhicule au temps t, d'un mode de conduite manuelle dudit véhicule dans lequel un conducteur conduit ledit véhicule, à un mode de conduite automatique dudit véhicule dans lequel ledit dispositif de conduite autonome (3) conduit ledit véhicule d'une manière libre d'une intervention dudit conducteur, afin d'assister progressivement la conduite du véhicule entre une vitesse V3 au-dessus de laquelle ledit véhicule est conduit par le conducteur d'une manière libre d'une assistance susceptible d'être fournie par le dispositif de conduite autonome, le véhicule étant dès lors en mode de conduite manuelle, et une vitesse V1 en dessous de laquelle ledit véhicule est conduit par ledit dispositif de conduite autonome d'une manière libre d'une intervention dudit conducteur, le véhicule étant alors en mode de conduite automatique, avec V1 < V3.

**2.** Système d'aide à la conduite selon la revendication 1, pour lequel le dispositif de conduite autonome (3) est configuré pour rendre progressivement le contrôle de la direction dudit véhicule audit conducteur afin de passer progressivement du mode de conduite automatique au mode de conduite manuelle.

**3.** Système d'aide à la conduite selon une des revendications 1 ou 2, pour lequel le dispositif de conduite autonome (3) comprend un système de contrôle de la direction (4) dudit véhicule (1) capable de contrôler une orientation d'un essieu directeur dudit véhicule (1) par application d'un couple de forces sur un arbre de direction dudit essieu directeur.

**4.** Système d'aide à la conduite selon la revendication 3, pour lequel le dispositif de conduite autonome (3) est configuré pour déterminer et contrôler une intensité dudit couple de force en fonction de la vitesse V(t) dudit véhicule et de la détermination d'une trajectoire par ledit dispositif de détermination d'une trajectoire (2) afin de réaliser ladite prise de contrôle progressive ou afin de donner progressivement ledit contrôle.

**5.** Système d'aide à la conduite selon une des revendications 3 ou 4, **caractérisé en ce que** le dispositif de conduite autonome (3) comprend une base de données définissant la vitesse V1 et la vitesse V3, ledit dispositif de conduite autonome étant configuré pour comparer ladite vitesse V(t) dudit véhicule (1) au temps t auxdites vitesses V1 et V3, de façon à ce que le mode de conduite manuelle soit réalisé pour des vitesses V(t) supérieures à la vitesse V3, le mode de conduite automatique soit réalisé pour des vitesses V(t) inférieures à la vitesse V1 si une trajectoire a été déterminée par le dispositif de détermination d'une trajectoire (2), et un mode de conduite assisté soit réalisé pour des vitesses V(t) comprises entre V1 et V3 si une trajectoire a été déterminée par le dispositif de détermination d'une trajectoire (2).

**6.** Système d'aide à la conduite selon la revendication 5, **caractérisé en ce que** le dispositif de conduite autonome (3) est configuré pour calculer un taux $T_V$ d'application dudit couple de forces, ce taux étant variable pour des vitesses V(t) comprises entre V1 et V3.

**7.** Système d'aide à la conduite selon la revendication 6, pour lequel le taux $T_V$ varie en fonction de la vitesse V(t) en prenant des valeurs continuellement croissantes de 0% à 100% pour des vitesses décroissantes de V3 à V1.

**8.** Système d'aide à la conduite selon une des revendications 3-7, pour lequel le dispositif de conduite autonome (3) est configuré pour déterminer et contrôler une intensité dudit couple de force en fonction

- d'un écart E(t) entre la position réelle du véhicule au temps t et une position optimale dudit véhicule au temps t telle que définie par ladite trajectoire, et
- de la détermination d'une trajectoire par ledit dispositif de détermination d'une trajectoire (2)

afin de réaliser ladite prise de contrôle progressive ou afin de donner progressivement ledit contrôle.

**9.** Système d'aide à la conduite selon la revendication 8, **caractérisé en ce que** le dispositif de conduite autonome (3) est configuré pour calculer un taux $T_E$ d'application dudit couple de forces, ce taux étant variable pour des écarts E(t) compris entre un écart E1 et un écart E3.

**10.** Système d'aide à la conduite selon la revendication 9, pour lequel le taux $T_E$ varie en fonction de l'écart E(t) en prenant des valeurs continuellement croissantes de 0% à 100% pour des écarts E(t) croissants de E1 à E3.

**11.** Méthode d'aide à la conduite d'un véhicule (1) au moyen d'un système d'aide à la conduite, ladite méthode étant destinée à assister un conducteur pour la conduite dudit véhicule, la méthode comprenant :

- une détermination d'une trajectoire dudit véhicule par un dispositif de détermination d'une trajectoire (2) ;
- une détermination d'une vitesse V(t) dudit véhicule au temps t par un dispositif de conduite autonome (3) ;

et étant **caractérisée par** une prise de contrôle progressive d'un contrôle de la direction en fonction de la vitesse V(t) du véhicule afin de passer progressivement d'un mode de conduite manuelle dudit véhicule dans lequel le conducteur conduit ledit véhicule, à un mode de conduite automatique dudit véhicule dans lequel ledit dispositif de conduite autonome conduit ledit véhicule d'une manière libre d'une intervention dudit conducteur afin d'assister progressivement la conduite du véhicule entre une vitesse V3 au-dessus de laquelle ledit véhicule est conduit par le conducteur d'une manière libre d'une assistance susceptible d'être fournie par le dispositif de conduite autonome, le véhicule étant dès lors en mode de conduite manuelle, et une vitesse V1 en dessous de laquelle ledit véhicule est conduit par ledit dispositif de conduite autonome d'une manière libre d'une intervention dudit conducteur, le véhicule étant alors en mode de conduite automatique, avec V1 < V3.

**12.** Méthode d'aide à la conduite selon la revendication 11, comprenant

- une conduite automatique et autonome dudit véhicule au moyen dudit dispositif de conduite autonome (3) si à un temps t :

  ◦ une trajectoire a été déterminée par ledit dispositif de détermination d'une trajectoire (2) ; et
  ◦ la vitesse V(t) dudit véhicule préalablement déterminée est inférieure ou égale à la vitesse V1 prédéfinie;

- une conduite assistée par ledit dispositif de conduite autonome (3) si audit temps t :

  ◦ une trajectoire a été déterminée par ledit dispositif de détermination d'une trajectoire ; et
  ◦ la vitesse V(t) dudit véhicule préalablement déterminée est comprise entre V1 et V3;

le dispositif de conduite autonome fournissant alors une assistance partielle à la conduite afin de passer progressivement dudit mode de conduite manuelle audit mode de conduite automatique;
- une conduite manuelle libre d'un contrôle d'un système de contrôle de la direction (4) par ledit dispositif de conduite autonome dès que la vitesse V(t) est supérieure ou égale à la vitesse V3 et/ou qu'aucune trajectoire n'a pu être déterminée par ledit dispositif de détermination d'une trajectoire (2).

**13.** Méthode d'aide à la conduite selon la revendication 12, **caractérisé en ce que** ladite conduite automatique comprend un contrôle du système de contrôle de la direction (4) par le dispositif de conduite autonome (3) en fonction de ladite trajectoire afin de diriger ledit véhicule (1) selon ladite trajectoire d'une manière libre d'une intervention dudit conducteur.

**14.** Méthode d'aide à la conduite selon une des revendications 12 à 13, selon laquelle ladite conduite assistée comprend une détermination d'un taux $T_V$ d'application d'un couple de forces sur un arbre de direction dudit véhicule en fonction de la vitesse V(t), et/ou une détermination d'un taux $T_E$ d'application d'un couple de forces sur un arbre de direction dudit véhicule en fonction d'un écart E(t) entre la position du véhicule au temps t et une position optimale que devrait avoir ledit véhicule s'il suivait ladite trajectoire au temps t, et la méthode comprend un contrôle du système de contrôle de la direction (4) par le dispositif de conduite autonome (3) en fonction de ladite trajectoire et dudit taux $T_V$ et/ou $T_E$ afin d'aider le conducteur à diriger ledit véhicule (1) selon ladite trajectoire en réduisant dudit taux $T_V$ si uniquement le taux $T_V$ a été calculé, ou en réduisant dudit taux $T_E$ si uniquement le taux $T_E$ a été calculé, ou en réduisant d'un taux global $T_G$ qui est une fonction de $T_E$ et $T_V$ si chacun des taux $T_E$ et $T_V$ a été calculé, l'effort à fournir par ledit conducteur lors de sa conduite dudit véhicule (1).

**Patentansprüche**

**1.** Fahrerassistenzsystem für ein Fahrzeug (1), wobei das System Folgendes umfasst:

- eine Vorrichtung (2) zur Bestimmung einer Route, die dazu fähig ist, eine Route für das Fahrzeug zu bestimmen;
- eine Vorrichtung (3) für autonomes Fahren zur Unterstützung des Fahrers beim Führen des Fahrzeugs;

wobei das Fahrerassistenzsystem **dadurch gekennzeichnet ist, dass** die Vorrichtung (3) für autonomes Fahren so ausgebildet ist, dass sie eine progressive Übernahme einer Steuerung der Lenkung durchführt, um in Abhängigkeit von einer Geschwindigkeit V(t) des Fahrzeugs zum Zeitpunkt t von einem manuellen Fahrmodus des Fahrzeugs, bei dem ein Fahrer das Fahrzeug führt, zunehmend zu einem automatischen Fahrmodus des Fahrzeugs zu gelangen, bei dem die Vorrichtung (3) für autonomes Fahren das Fahrzeug frei von einem Eingriff des Fahrers führt, um ein Führen des Fahrzeugs zwischen einer Geschwindigkeit V3, oberhalb von der das Fahrzeug vom Fahrer frei von einer von der Vorrichtung für autonomes Fahren bereitstellbaren Unterstützung geführt wird, wobei das Fahrzeug sich somit im manuellen Fahrmodus befindet, und einer Geschwindigkeit V1, unterhalb von der das Fahrzeug von der Vorrichtung für autonomes Fahren frei von einem Eingriff des Fahrers geführt wird, zunehmend zu unterstützen, wobei das Fahrzeug sich somit im automatischen Fahrmodus befindet, mit V1 < V3.

2. Fahrerassistenzsystem nach Anspruch 1, wobei die Vorrichtung (3) für autonomes Fahren so ausgebildet ist, dass sie die Steuerung der Lenkung des Fahrzeugs zunehmend auf den Fahrer überträgt, um vom automatischen Fahrmodus zunehmend zum manuellen Fahrmodus zu gelangen.

3. Fahrerassistenzsystem nach einem der Ansprüche 1 oder 2, wobei die Vorrichtung (3) für autonomes Fahren ein System (4) zur Steuerung der Lenkung des Fahrzeugs (1) umfasst, das eine Ausrichtung einer Lenkachse des Fahrzeugs (1) durch Einwirkung eines Kräftepaars auf eine Lenkwelle der Lenkachse steuern kann.

4. Fahrerassistenzsystem nach Anspruch 3, wobei die Vorrichtung (3) für autonomes Fahren so ausgebildet ist, dass sie eine Intensität des Kräftepaars in Abhängigkeit von der Geschwindigkeit V(t) des Fahrzeugs und der Bestimmung einer Route mittels der Vorrichtung (2) zur Bestimmung einer Route bestimmt und steuert, um die progressive Übernahme der Steuerung durchzuführen oder um die Steuerung zunehmend zu übergeben.

5. Fahrerassistenzsystem nach einem der Ansprüche 3 oder 4, **dadurch gekennzeichnet, dass** die Vorrichtung (3) für autonomes Fahren eine Datenbank umfasst, welche die Geschwindigkeit V1 und die Geschwindigkeit V3 definiert, wobei die Vorrichtung für autonomes Fahren so ausgebildet ist, dass sie die Geschwindigkeit V(t) des Fahrzeugs (1) zum Zeitpunkt t mit den Geschwindigkeiten V1 und V3 so vergleicht, dass der manuelle Fahrmodus für Geschwindigkeiten V(t) erfolgt, die höher als die Geschwindigkeit V3 sind, der automatische Fahrmodus für Geschwindigkeiten V(t) erfolgt, die kleiner als die Geschwindigkeit V1 sind, wenn von der Vorrichtung (2) zur Bestimmung einer Route eine Route bestimmt wurde, und ein Assistenz-Fahrmodus für Geschwindigkeiten V(t) zwischen V1 und V3 erfolgt, wenn von der Vorrichtung (2) zur Bestimmung einer Route eine Route bestimmt wurde.

6. Fahrerassistenzsystem nach Anspruch 5, **dadurch gekennzeichnet, dass** die Vorrichtung (3) für autonomes Fahren so ausgebildet ist, dass sie eine Rate $T_V$ der Einwirkung des Kräftepaars berechnet, wobei diese Rate für die Geschwindigkeiten V(t) zwischen V1 und V3 veränderlich ist.

7. Fahrerassistenzsystem nach Anspruch 6, wobei die Rate $T_V$ sich in Abhängigkeit von der Geschwindigkeit V(t) verändert, indem von 0 % bis 100 % kontinuierlich zunehmende Werte für die von V3 bis V1 abnehmenden Geschwindigkeiten verwendet werden.

8. Fahrerassistenzsystem nach einem der Ansprüche 3-7, wobei die Vorrichtung (3) für autonomes Fahren so ausgebildet ist, dass sie zur Bestimmung und Steuerung einer Intensität des Kräftepaars in Abhängigkeit

- von einer Abweichung E(t) zwischen der tatsächlichen Position des Fahrzeugs zum Zeitpunkt t und einer durch die Route definierten optimalen Position des Fahrzeugs zum Zeitpunkt t und
- von der Bestimmung einer Route durch die Vorrichtung (2) zur Bestimmung einer Route ausgebildet ist,

um die progressive Übernahme der Steuerung durchzuführen oder die Steuerung zunehmend zu übergeben.

9. Fahrerassistenzsystem nach Anspruch 8, **dadurch gekennzeichnet, dass** die Vorrichtung (3) für autonomes Fahren so ausgebildet ist, dass sie eine Rate $T_E$ der Einwirkung des Kräftepaars berechnet, wobei diese Rate für Abweichungen E(t) zwischen einer Abweichung E1 und einer Abweichung E3 veränderlich ist.

10. Fahrerassistenzsystem nach Anspruch 9, wobei die Rate $T_E$ sich in Abhängigkeit von der Abweichung E(t) verändert, indem von 0 % bis 100 % kontinuierlich zunehmende Werte für die von E1 bis E3 zunehmenden Abweichungen E(t) verwendet werden.

11. Verfahren zum Assistieren beim Führen eines Fahrzeugs (1) mittels eines Fahrerassistenzsystems, wobei das Verfahren dazu vorgesehen ist, einen Fahrer beim Führen des Fahrzeugs zu unterstützen, wobei das Verfahren Folgendes umfasst:

- eine Bestimmung einer Route des Fahrzeugs durch eine Vorrichtung (2) zur Bestimmung einer Route;
- eine Bestimmung einer Geschwindigkeit V(t) des Fahrzeugs zum Zeitpunkt t durch eine Vorrichtung (3) für autonomes Fahren;

und wobei es **gekennzeichnet ist durch** eine progressive Übernahme einer Steuerung der Lenkung in Abhängigkeit von der Geschwindigkeit V(t) des Fahrzeugs, um von einem manuellen Fahrmodus des Fahrzeugs, bei dem der Fahrer das Fahrzeug führt, zunehmend zu einem automatischen Fahrmodus des Fahrzeugs zu gelangen, bei dem die Vorrichtung für autonomes Fahren das Fahrzeug frei von einem Eingriff des Fahrers führt, um ein Führen des Fahrzeugs zwischen einer Geschwindigkeit V3, oberhalb von der das Fahrzeug vom Fahrer frei von einer von der Vorrichtung für autonomes Fahren bereitstellbaren Unterstützung geführt wird, wobei das Fahrzeug sich somit im manuellen Fahrmodus befindet, und einer Geschwindigkeit V1, unterhalb von der das Fahrzeug von der Vorrichtung für autonomes Fahren frei von einem Eingriff des Fahrers geführt wird, zunehmend zu unterstützen, wobei das Fahrzeug sich somit im automatischen Fahrmodus befindet, mit V1 < V3.

**12.** Verfahren zum Assistieren beim Führen nach Anspruch 11, umfassend

- ein automatisches und autonomes Führen des Fahrzeugs mittels der Vorrichtung (3) für autonomes Fahren, wenn zu einem Zeitpunkt t:

    ◦ eine Route durch die Vorrichtung (2) zur Bestimmung einer Route bestimmt wurde; und
    ◦ die zuvor bestimmte Geschwindigkeit V(t) des Fahrzeugs kleiner als die vordefinierte Geschwindigkeit V1 oder gleich dieser ist;

- ein von der Vorrichtung (3) für autonomes Fahren unterstütztes Führen, wenn zum Zeitpunkt t:

    ◦ eine Route durch die Vorrichtung zur Bestimmung einer Route bestimmt wurde; und
    ◦ die zuvor bestimmte Geschwindigkeit V(t) des Fahrzeugs zwischen V1 und V3 liegt;

wobei die Vorrichtung für autonomes Fahren somit eine partielle Fahrassistenz bereitstellt, um vom manuellen Fahrmodus zunehmend in den automatischen Fahrmodus zu gelangen;
- ein freies manuelles Führen einer Steuerung eines Systems (4) zur Steuerung der Lenkung durch die Vorrichtung für autonomes Fahren, sobald die Geschwindigkeit V(t) höher als die Geschwindigkeit V3 oder gleich dieser ist und/oder von der Vorrichtung (2) zur Bestimmung einer Route keine Route bestimmt werden konnte.

**13.** Verfahren zum Assistieren beim Führen nach Anspruch 12, **dadurch gekennzeichnet, dass** das automatische Führen eine Steuerung des Systems (4) zur Steuerung der Lenkung durch die Vorrichtung (3) für autonomes Fahren in Abhängigkeit von der Route umfasst, um das Fahrzeug (1) frei von einem Eingriff des Fahrers entlang einer Route zu lenken.

**14.** Verfahren zum Assistieren beim Führen nach einem der Ansprüche 12 bis 13, wobei das unterstützte Führen eine Bestimmung einer Rate $T_V$ der Einwirkung eines Kräftepaars auf eine Lenkwelle des Fahrzeugs in Abhängigkeit von der Geschwindigkeit V(t) und/oder eine Bestimmung einer Rate $T_E$ der Einwirkung eines Kräftepaars auf eine Lenkwelle des Fahrzeugs in Abhängigkeit von einer Abweichung E(t) zwischen der Position des Fahrzeugs zum Zeitpunkt t und einer optimalen Position umfasst, die das Fahrzeug aufweisen müsste, wenn es der Route zum Zeitpunkt t folgen würde, und das Verfahren eine Steuerung des Systems (4) zur Steuerung der Lenkung durch die Vorrichtung (3) für autonomes Fahren in Abhängigkeit von der Route und der Rate $T_V$ und/oder $T_E$ umfasst, um dem Fahrer beim Lenken des Fahrzeugs (1) entlang der Route zu assistieren, indem die Rate $T_V$ vermindert wird, wenn nur die Rate $T_V$ berechnet wurde, oder indem die Rate $T_E$ vermindert wird, wenn nur die Rate $T_E$ berechnet wurde, oder indem eine Gesamtrate $T_G$ vermindert wird, bei der es sich um eine Funktion von $T_E$ und $T_V$ handelt, wenn jede der Raten $T_E$ und $T_V$ berechnet wurden, wobei es sich um die Kraft handelt, die vom Fahrer aufzubringen ist, während er das Fahrzeug (1) führt.

**Claims**

**1.** Driver assistance system for a vehicle (1), said system comprising:

- a path determining device (2) capable of determining a path for said vehicle;
- an autonomous driving device (3) for assisting said driver when driving the vehicle;

said driver assistance system being **characterised in that** the autonomous driving device (3) is designed to progressively assume steering control in order to pass progressively, as a function of a speed V(t) of the vehicle at time t, from a manual driving mode of said vehicle in which a driver drives said vehicle, to an automatic driving mode of said vehicle in which said autonomous driving device (3) drives said vehicle free from intervention of said driver, in order to progressively assist with the driving of the vehicle between a speed V3 above which said vehicle is driven by the driver in a manner not subject to assistance from the autonomous driving device, the vehicle being from then on in manual driving mode, and a speed V1 below which said vehicle is driven by said autonomous driving device in a manner free from intervention by said driver, the vehicle being then in automatic driving mode, with V1 < V3.

2. Driver assistance system according to claim 1, wherein the autonomous driving device (3) is designed to progressively return steering control of said vehicle to said driver in order to pass progressively from automatic driving mode to manual driving mode.

3. Driver assistance system according to one of claims 1 or 2, wherein the autonomous driving device (3) comprises a steering control system (4) of said vehicle (1) capable of controlling an orientation of a steering axle of said vehicle (1) by applying a torque to a steering shaft of said steering axle.

4. Driver assistance system according to claim 3, wherein the autonomous driving device (3) is designed to determine and control an amount of said torque as a function of the speed V(t) of said vehicle and of the determination of a path by said path determining device (2) in order to implement said progressive takeover of control or in order to progressively hand over said control.

5. Driver assistance system according to one of claims 3 or 4, **characterised in that** the autonomous driving device (3) comprises a database defining the speed V1 and the speed V3, said autonomous driving device being designed to compare said speed V(t) of said vehicle (1) at time t with said speeds V1 and V3, such that manual driving mode is implemented for speeds V(t) above the speed V3, automatic driving mode is implemented for speeds V(t) below the speed V1 if a path has been determined by the path determining device (2), and an assisted driving mode is implemented for speeds V(t) between V1 and V3 if a path has been determined by the path determining device (2).

6. Driver assistance system according to claim 5, **characterised in that** the autonomous driving device (3) is designed to calculate a level $T_V$ of application of said torque, this level being variable for speeds V(t) between V1 and V3.

7. Driver assistance system according to claim 6, wherein the level $T_V$ varies as a function of the speed V(t) by assuming continuously increasing values from 0% to 100% for speeds decreasing from V3 to V1.

8. Driver assistance system according to one of claims 3-7, wherein the autonomous driving device (3) is designed to determine and control an amount of said torque as a function of

- a deviation E(t) between the actual position of the vehicle at time t and an optimum position of said vehicle at time t as defined by said path, and
- the determination of a path by said path determining device (2)

in order to implement said progressive takeover of control or in order to progressively hand over said control.

9. Driver assistance system according to claim 8, **characterised in that** the autonomous driving device (3) is designed to calculate a level $T_E$ of application of said torque, this level being variable for deviations E(t) between deviation E1 and deviation E3.

10. Driver assistance system according to claim 9, wherein the level $T_E$ varies as a function of the deviation E(t) by assuming continuously increasing values from 0% to 100% for deviations E(t) increasing from E1 to E3.

11. Driver assistance method for a vehicle (1) by means of a driver assistance system, said method being designed to assist a driver for driving said vehicle, the method comprising:

- determining of a path of said vehicle by a path determining device (2);
- determining of a speed V(t) of said vehicle at time t by an autonomous driving device (3);

and being **characterised by** a progressive takeover of steering control, as a function of the speed V(t) of the vehicle, in order to pass progressively from a manual driving mode of said vehicle, in which the driver is driving said vehicle, to an automatic driving mode of said vehicle in which said autonomous driving device is driving said vehicle in a manner free from intervention by said driver in order to progressively assist the driving of the vehicle between a speed V3 above which said vehicle is driven by the driver in a manner not subject to assistance from the autonomous driving device, the vehicle being from then on in manual driving mode, and a speed V1 below which said vehicle is driven by said autonomous driving device in a manner free from intervention by said driver, the vehicle being then in automatic driving mode, with V1 < V3.

12. Driver assistance method according to claim 11, comprising

- automatic and autonomous driving of said vehicle by means of said autonomous driving device (3) if, at a time t,

  ◦ a path has been determined by said path determining device (2); and
  ◦ the previously determined speed V(t) of said vehicle is less than or equal to the predefined speed V1;

- assisted driving by said autonomous driving device (3) if, at time t:

  ◦ a path has been determined by said path determining device; and
  ◦ the previously determined speed V(t) of said vehicle is between V1 and V3;

the autonomous driving device therefore providing partial driving assistance in order to pass progressively from said manual driving mode to said automatic driving mode;
- manual driving free from control of said steering control system (4) by said autonomous driving device as soon as the speed V(t) is greater than or equal to the speed V3 and/or no path could be determined by said path determining device (2).

13. Driver assistance method according to claim 12, **characterised in that** said automatic driving comprises control of the steering control system (4) by the autonomous driving device (3) as a function of said path in order to steer said vehicle (1) according to said path in a manner free from intervention of said driver.

14. Driver assistance method acccording to one of claims 12 or 13, wherein said assisted driving consists of determining a level $T_V$ of application of a torque to a steering shaft of said vehicle as a function of the speed V(t), and/or determining a level $T_E$ of application of a torque to a steering shaft of said vehicle as a function of a deviation E(t) between the position of the vehicle at time t and an optimum position that said vehicle should have if it was following said path at time t, and said method includes control of the steering control system (4) by the autonomous driving device (3) as a function of said path and of said level $T_V$ and/or $T_E$ in order to assist the driver with steering said vehicle (1) according to said path by reducing, by said level $T_V$, the effort to be exerted by said driver while driving said vehicle (1) if solely the level $T_V$ has been calculated, or reducing it by said level $T_E$ if solely the level $T_E$ has been calculated, or reducing it by an overall level $T_G$ which is a function of $T_E$ and $T_V$ if each of the levels $T_E$ and $T_V$ has been calculated.

FIG 1

FIG 2

FIG 3

FIG 4

**RÉFÉRENCES CITÉES DANS LA DESCRIPTION**

**Documents brevets cités dans la description**

- US 2013060414 A1
- US 20020188404 A1
- US 20140032017 A1
- US 20130124041 A1

**Littérature non-brevet citée dans la description**

- **HAN-SHUE TAN.** *Develop Precision Docking Function for Bus Opération,* 01 Mars 2003